# EUROPÄISCHE PATENTANMELDUNG

(11) **EP 1 070 684 A1**
(43) Veröffentlichungstag der Anmeldung: **24.01.2001**
(21) Anmeldenummer: 00113453.5
(22) Anmeldetag: 24.06.2000
(51) Int. Cl.: C04B 28/34, H05B 3/74, H01B 3/04, C04B 20/10

(54) **Vermiculite enthaltende Mischung, Verfahren zur Herstellung eines Formteils aus der Mischung, Formteil und Verwendung des Formteils**

(30) Priorität: 17.07.1999 DE 19933606
(71) Anmelder: Zeug, Sepp jun., 71032 Böblingen (DE)
(72) Erfinder: Zeug, Sepp jun., 71032 Böblingen (DE)
(74) Vertreter: Dreiss, Fuhlendorf, Steimle & Becker

(57) **Zusammenfassung**

Die Erfindung betrifft eine Mischung, die Verwendung der Mischung zur Herstellung eines Formteils, ein Verfahren zur Herstellung des Formteils, das Formteil und die Verwendung des Formteils.

Die erfindungsgemäße Mischung ist gekennzeichnet durch mindestens:

| | | |
|---|---|---|
| a) | 60-90% | Vermiculit, |
| b) | 5-20% | Phosphatbinder, |
| c) | 5-20% | H₂O, |
| d) | 0-6 % | hochdisperses Metalloxid |
| e) | 0-10% | Ton. |

Die erfindungsgemäße Mischung hat besonders gute elektrische und thermische Isolationseigenschaften sowie eine hohe mechanische Festigkeit.

## Beschreibung

Die Erfindung betrifft eine Mischung, die Verwendung der Mischung, ein Verfahren zur Herstellung eines Formteils aus der Mischung, ein Formteil und die Verwendung des Formteils.

Elektroherde sind mit einer Kochmulde oder einem Glaskeramikkochfeld ausgestattet. Zur Beheizung der Kochmulde oder des Kochfeldes werden Heizleiter verwendet. Die Heizleiter sind nach unten hin von hoch wärmedämmenden Unterschalen umgeben. Die Unterschalen können von einer keramischen Isoliermasse gebildet sein, die in einem metallischen Träger aufgenommen ist. In zusammengebautem Zustand ist zwischen der Unterschale und der Kochmulde oder dem Kochfeld ein Ring mit einem rechteckförmigen Querschnitt angeordnet. Der Ring dient einerseits zur thermischen und elektrischen Isolation nach außen. Andererseits dient der Ring zur Befestigung der Heizleiter und muss deshalb eine gewisse mechanische Festigkeit aufweisen.

Herkömmliche Ringe werden aus hochdisperser Kieselsäure beziehungsweise aus Vermiculit hergestellt. Die Ringe aus hochdisperser Kieselsäure haben den Nachteil, dass ihre mechanische Festigkeit zu gering ist. Bei den Ringen aus Vermiculit wird zum Binden des Vermiculits Wasserglas verwendet. Übliche Mischungsverhältnisse liegen bei 60 bis 80% Vermiculit und 20 bis 40% Wasserglas. Beide Rohstoffe sind billig und für einen niedrigen Temperaturbereich bestimmt. Ein großer Nachteil des Wasserglases besteht darin, dass es Alkalien enthält. Alkalienhaltige Materialien nehmen sehr leicht Feuchtigkeit aus der Luft auf. Diese Alkalien und die aufgenommene Feuchtigkeit vermindern die elektrische Isolationswirkung der hergestellten Ringe.

Auch nach einer Temperung bis zu 200°C kann das erhärtete Material durch Kontakt mit Wasser wieder weich werden. Die Erhärtung von mit Wasserglas gebundenen Mischungen erfolgt durch den Verlust von Wasser. Der Verlust von Wasser wiederum führt zu einem Volumenschrumpf, der in einer zur Herstellung der Ringe verwendeten Pressform berücksichtigt werden muss. Beim Erhärten verkleben einzelne Teilchen miteinander.

Aus der EP 0 644 707 A1 ist ein Strahlungsheizkörper zum Beheizen einer glaskeramischen Kochplatte bekannt. Der bekannte Strahlungsheizkörper umfasst einen Isolationskörper aus einem hochporösen, faserfreien anorganischen Material. Bei dem anorganischen Material kann es sich u.a. um Vermiculit handeln. Zur Herstellung von Formkörpern wird dem hochporösen anorganischen Material ein aushärtendes Bindemittel zugemischt. Zu den aushärtenden Bindemitteln, die mit dem hochporösen anorganischen Material vermischt werden, gehören wässrige Lösungen von Phosphaten wie Monoaluminiumphosphat, Silikophosphaten sowie Alkaliwassergläser und Kieselsol.

Aufgabe der Erfindung ist es, eine Mischung zur Herstellung eines Formteils bereitszustellen, das eine ausreichende Festigkeit, gute Wärmeisolationseigenschaften und gute elektrische Isolationseigenschaften ausweist. Insbesondere sollen die aus der erfindungsgemäßen Mischung hergestellten Formteile die Anforderungen der mittlerweile verschärften Prüfung für die Kriechstromfestigkeit bei der VDE-Ableitstrommessung nach DIN VDE 0700 Teil 2 erfüllen. Bei dieser Prüfung werden die Formteile in einem Feuchtraum gelagert. Anschließend wird der Ableitstrom gemessen. Die erfindungsgemäße Mischung soll sich gut zur Herstellung der vorab beschriebenen Ringe eignen.

Die Aufgabe wird durch die Merkmale der unabhängigen Patentansprüche 1, 11, 12, 15 und 18 gelöst. Vorzugsweise wird der erfindungsgemäße Ring durch Verpressen der pulvrigen und rieselfähigen Mischung hergestellt. Mit der Erfindung werden die folgenden Vorteile erzielt:
- Gute Entformbarkeit:: das verpresste Formteil bleibt nach dem Öffnen der Presse nicht an der Form hängen;
- Hohe Grünfestigkeit:: das verpresste Formteil kann ohne eine weitere Wärmebehandlung aus der Form genommen werden, ohne dass es sich dabei verformt;
- kein Quellen:: die verpressten Formteile verformen sich nach der Druckentlastung in der Presse nicht. Sie behalten ihre Größe bei und nehmen nicht wieder ihre Ausgangsgröße an. Zur Vermeidung des Quellens, das an Querrissen im fertigen Formteil erkannt werden kann, ist besonders die genaue Bemessung des der Mischung beigegebenen Wasseranteils von Bedeutung;
- Hohe Endfestigkeit:: Insbesondere nach einer Temperung bei 200° bis 300°C oder höher ist eine ausreichende Festigkeit gegeben;
- Hohe Volumenstabilität:: Das fertige Formteil verformt sich im Betrieb so gut wie nicht mehr;
- Elektrische Eigenschaften:: Auch nach einer Lagerung in einem Feuchtraum bleiben die guten elektrischen Isolationseigenschaften erhalten, was durch einen geringen Ableitstrom nachweisbar ist;
- und vertretbarer Preis:: die erfindungsgemäße Lösung liegt preislich in einer ähnlichen Größenordnung wie herkömmliche Lösungen.

Vermiculit ist ein Mineral, das sich durch rasches Erhitzen auf über 850°C senkrecht zu den Schichtoberflächen bläht und das ca. 30-fache seines Ausgangsvolumens einnimmt. Das bedeutet, dass sich zwischen den Schichten große Hohlräume bilden, in die Flüssigkeiten eindringen können. Wenn ein flüssiges Bindemittel in diese Hohlräume eindringt, steht das eingedrungene Bindemittel nicht mehr zur Verfügung, um einzelne Teilchen miteinander zu verkleben. Diese Hohlräume können einem flüssigen Bindemittel auch Wasser entziehen. Wenn dem flüssigen Bindemittel Wasser entzogen wird, dann steigt die Viskosität des Bindemittels stark an. Außerdem verschlechtert sich die Verteilung des Bindemittels. Das kann dazu führen, dass einzelne Nester mit einem hohen Bindemittelanteil zurückbleiben, anstatt dass alle Vermiculitteilchen mit Bindemittel benetzt und verklebt werden. Das wiederum kann zu einer geringen Festigkeit des herzustellenden Formteils führen.

Im Rahmen der vorliegenden Erfindung haben sich zwei Möglichkeiten ergeben, um eine unzureichende Verteilung des Bindemittels zu verhindern. Zum einen ist es möglich, eine gorße Menge Wasser beizufügen. Durch das zusätzliche Wasser wird die Viskosität des Bindemittels so gering, dass bei einer ausreichenden Mischzeit alle zu verklebenden Vermiculitteilchen benetzt werden. Ein Teil des Bindemittels würde jedoch auch in die Hohlräume des Vermiculits eindringen und nicht mehr zum Verkleben der Teilchen zur Verfügung stehen. Dabei würde aber die Gefahr bestehen, dass die Formteile nach der Druckentlastung in der Form aufquellen würden. Das Quellen würde zu Querrissen an den Formteilen führen. Die zweite Möglichkeit besteht darin, dass das Bindemittel nur an der Oberfläche der Vermiculitteilchen bleibt und nicht eindringt. Das wird gemäß der vorliegenden Erfindung durch die Zugabe des hochdispersen Metalloxides erreicht. Das hochdisperse Material dringt nicht in die Vermiculitteilchen ein, sondern lagert sich an der Oberfläche an. Wenn nun ein Bindemittel zugegeben wird, so lagert sich das Bindemittel primär an das hochdisperse Metalloxid an, weil dieses Material stärker "saugend" wirkt als das Innere der Vermiculitteilchen. Beim Verpressen der Formteile werden nun die einzelnen Teilchen in Kontakt gebracht, und das Bindemittel verklebt sie.

Gemäß der vorliegenden Erfindung werden beide Möglichkeiten miteinander kombiniert. Das hochdisperse Metalloxid umhüllt die Vermiculitteilchen. Durch Zugabe von Wasser zum Bindemittel wird dessen Viskosität stark abgesenkt und eine gute Verteilung des Bindemittels erreicht. Dabei sorgt das hochdisperse Metalloxid dafür, dass das Bindemittel eher an der Oberfläche der Vermiculitteilchen bleibt und im Wesentlichen nicht in diese eindringt.

Vermiculit wird im Rahmen der vorliegenden Erfindung in geblähter Form verwendet. Wenn das rieselfähige Material auf über 850°C erhitzt wird, bläht sich das Vermiculit senkrecht zu den Schichtoberflächen bis auf das Dreißigfache seines Ausgangsvolumens aus. Das erhitzte, aufgeblähte Vermiculit ist bis 1100°C beständig. Das entspricht einer relativ niedrigen Anwendungstemperatur.

Normalerweise werden Füllstoffe mit einer niedrigen Anwendungstemperatur mit einem Bindemittel kombiniert, das ebenfalls eine niedrige Anwendungstemperatur aufweist. Im Gegensatz dazu wird im Rahmen der vorliegenden Erfindung ein Bindemittel mit einer hohen Anwendungstemperatur verwendet, nämlich ein Phosphatbinder.

Bei dem verwendeten Phosphatbinder handelt es sich vorzugsweise um eine wässrige Lösung eines Monoaluminiumphosphates (MAP), das normalerweise als Kaltbindemittel zur Erzielung einer sogenannten Grünfestigkeit bei Feuerfestmaterialien im Hochtemperaturbereich eingesetzt wird. Die wässrige Lösung wird auch als MAP-Flüssigkeit bezeichnet. Das Aluminiumphosphat kann durch andere Phosphate, wie Magnesiumphosphat, Natriumaluminiumphosphat, Borphosphat, Chromphosphat, Phosphorsäure, Polyphosphat oder Mischungen von diesen ersetzt werden.

Phosphatbinder sind hochtemperaturbeständig und teuer und werden normalerweise zum Binden von teuren und hochtemperaturbeständigen Materialien, wie Korund und Zirkon, verwendet. Sie enthalten keine Alkalien. Nach einer Temperung bei 300° bis 400°C sind sie wasserbeständig. Die Aushärtung wird durch Vernetzung beziehungsweise Polykondensation erreicht. Dadurch kann eine gute Volumentstabilität erzielt werden. Die durch das Tempern erreichten Festigkeiten steigen mit der Temperatur. Durch das Fehlen der Alkalien weist das fertige Formteil bessere elektrische Isolationseigenschaften auf. Die Aufnahme von Feuchtigkeit bei einer Feuchtraumlagerung ist erheblich reduziert.

Bei dem verwendeten Metalloxid handelt es sich vorzugsweise um hochdisperse "pyrogene" Kieselsäure (SiO₂), die im amorphen Zustand vorliegt und eine sehr große spezifische Oberfläche aufweist. Es kann aber auch Aluminiumoxid oder Zirkonoxid in hochdisperser Form verwendet werden.

Das beigemischte Wasser dient zum Verdünnen.

Der Ton dient einerseits dazu, die Bindigkeit zu erhöhen und andererseits als Reaktionspartner für den Phosphatbinder.

Bei der Herstellung des Formteils wird der in Form einer wässrigen Lösung vorliegende Phosphatbinder zunächst mit dem Wasser vermischt, um eine gute Verteilung des Binders im Wasser zu erreichen. Die im trockenen Zustand vorliegenden Materialien Vermiculit, Metalloxid und Ton werden im trockenen Zustand vermischt, um eine gute Verteilung zu erreichen. Daraufhin wird die flüssige Mischung aus Phosphatbinder und Wasser in die trockene Mischung aus Vermiculit, Metalloxid und Ton eingesprüht und alles miteinander vermischt. Die resultierende Mischung wird dann in einer Form verpresst.

Vorzugsweise wird eine Temperung in mehreren Schritten durchgeführt. Eine Temperung von zunächst zwei Stunden bei 80°C, anschließend 2 Stunden bei 200°C und schließlich 2 Stunden bei 300°C hat sich als besonders vorteilhaft erwiesen.
Die besonderen Eigenschaften der erfindungsgemäßen Mischung kommen insbesondere bei der Herstellung von filigranen Formteilen zur Geltung. Solche filigranen Bauteile, wie zum Beispiel die vorab beschriebenen Ringe, haben eine Vielzahl von kritischen Flächen, die bei der Herstellung des Formteils an der Form anhaften können.

Weitere Vorteile, Merkmale und Einzelheiten der Erfindung ergeben sich aus den Unteransprüchen und der nachfolgenden Beschreibung, in der mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Im Rahmen der vorliegenden Erfindung wurden eine Reihe von Versuchen durchgeführt, deren Ergebnisse im folgenden wiedergegeben sind.

### 1. Versuch:

### Mischung 1

| | | |
|---|---|---|
| Vermiculit | 76,5% | 750 g |
| MAP-Flüssigkeit | 10 % | 74,5 g |
| H₂0 | 10 % | 74,5 g |
| hochdisperse Kieselsäure | 2 % | 18,6 g |
| Ton | 1,5% | 14 g |

Das Vermiculit wird in einem Mischer vorgemischt, anschließend der Ton und die Kieselsäure zugegeben. Die erhaltene Mischung wird 5 Minuten lang gemischt. Daraufhin wird das Wasser und die MAP-Flüssigkeit zusammengemischt und mit Hilfe einer Sprühflasche der Ton-/Kieselsäure-/Vermiculitmischung zudosiert. Nach einer 10-minütigen Mischzeit sieht das Material im Mischer sehr trocken aus. Das Material wird aus dem Mischer genommen und in eine Pressform gefüllt und verpresst. Nach dem Verpressen sind die Entformbarkeit und die Grünfestigkeit gut.

### 2. Versuch:

### Mischung 2:

| | | |
|---|---|---|
| Vermiculit | 75,5% | 750 g |
| MAP-Flüssigkeit | 10 % | 99,3 g |
| H₂O | 10 % | 99,3 g |
| hochdisperse Kieselsäure | 3 % | 29,8 g |
| Ton | 1,5% | 14,9 g |

Das Vermiculit wird in einem Mischer vorgemischt. Anschließend wird der Ton und die Kieselsäure zugegeben und 5 Minuten lang vermischt. Anschließend werden das Wasser und die MAP-Flüssigkeit miteinander vermischt. Die daraus erhaltene Flüssigkeit wird mithilfe einer Sprühflasche auf die trockene Mischung aus Ton, Vermiculit und Kieselsäure aufgesprüht. Die resultierende Mischung wird 10 Minuten lang vermischt. Sie sieht im Mischer trocken aus. Das Material wird aus dem Mischer genommen und in eine Pressform gefüllt und verpresst. Nach dem Verpressen klebt die Formmasse leicht in der Form. Beim Auseinanderfahren der Form werden die Ringe etwas angehoben. Trotzdem ist die Entformbarkeit fast gut. Die Mischung 2 wirkt bei der Verarbeitung nasser als die Mischung 1. Die Grünfestigkeit ist gut.

### 3. Versuch:

### Mischung 3:

| | | |
|---|---|---|
| Vermiculit | 74,5% | 750 g |
| MAP-Flüssigkeit | 10 % | 86,5 g |
| H₂O | 10 % | 86,5 g |
| hochdisperse Kieselsäure | 4 % | 24 g |
| Ton | 1,5% | 14,4 g |

Das Herstellen der Mischung 3 erfolgt auf die gleiche Art und Weise wie das Herstellen der Mischungen 1 und 2. Die Mischung 3 klebt in der Form. Die Grünfestigkeit ist gut. Die Entformbarkeit ist nicht gut.

### 4. Versuch

### Mischung 4:

| | | |
|---|---|---|
| Vermiculit | 72,5% | 750 g |
| MAP-Flüssigkeit | 11 % | 75,5 g |
| H₂O | 11 % | 75,5 g |
| hochdisperse Kieselsäure | 4,0% | 28,3 g |
| Ton | 1,5% | 14,2 g |

Das Herstellen der Mischung 4 erfolgt genauso, wie bei den vorangegangenen Mischungen. Das Material sieht im Mischer sehr trocken aus. Die Entformbarkeit ist gut. Die Grünfestigkeit ist ebenfalls gut.

### 5. Versuch

### Mischung 5:

| | |
|---|---|
| Vermiculit | 79,5% |
| MAP-Flüssigkeit | 9 % |
| H₂O | 9 % |
| hochdisperse Kieselsäure | 1,0% |
| Ton | 1,5% |

Das Herstellen der Mischung 5 erfolgt genauso, wie bei den vorangegangenen Mischungen. Das Material sieht im Mischer sehr trocken aus. Die Entformbarkeit ist gut. Die Grünfestigkeit ist ebenfalls gut.

Bei den in den Versuchen hergestellten Ringen wurde eine Temperung von 2 Stunden bei 80°C und weiteren 2 Stunden bei 200°C durchgeführt. Einige Ringe aus den Mischungen 1 und 3 wurden zusätzlich 2 Stunden bei 300°C getempert. Dadurch wurden Verbesserungen in der Festigkeit und der Kriechstromfestigkeit erzielt. Das ist wohl darauf zurückzuführen, dass die Polykondensation dann vollständig abgeschlossen ist. Das Phosphat kann durch Feuchtigkeit nicht mehr aufgelöst werden.

Das Gewicht der Ringe liegt etwa zwischen 60 g und 100 g.

## Patentansprüche

1. Mischung, gekennzeichnet durch mindestens:
| | | |
|---|---|---|
| a) | 60-90% | Vermiculit, |
| b) | 5-20% | Phosphatbinder, |
| c) | 5-20% | H₂O, |
| d) | 0-6 % | hochdisperses Metalloxid, |
| e) | 0-10% | Ton. |

2. Mischung nach Anspruch 1, gekennzeichnet durch mindestens:
| | | |
|---|---|---|
| a) | 71-82,5% | Vermiculit, |
| b) | 8-12 % | Phosphatbinder, |
| c) | 8-12 % | H₂O, |
| d) | 1,5-6% | hochdisperses Metalloxid, |
| e) | 0- 5 % | Ton. |

3. Mischung nach Anspruch 2, gekennzeichnet durch:
| | | |
|---|---|---|
| a) | 76,5% | Vermiculit, |
| b) | 10,0% | Phosphatbinder, |
| c) | 10,0% | H₂O, |
| d) | 2,0% | hochdisperses Metalloxid, |
| e) | 1,5% | Ton. |

4. Mischung nach Anspruch 2, gekennzeichnet durch:
| | | |
|---|---|---|
| a) | 75,5% | Vermiculit, |
| b) | 10,0% | Phosphatbinder, |
| c) | 10,0% | H₂O, |
| d) | 3,0% | hochdisperses Metalloxid, |
| e) | 1,5% | Ton. |

5. Mischung nach Anspruch 2, gekennzeichnet durch:
| | | |
|---|---|---|
| a) | 74,5% | Vermiculit, |
| b) | 10,0% | Phosphatbinder, |
| c) | 10,0% | H₂O, |
| d) | 4,0 % | hochdisperses Metalloxid, |
| e) | 1,5 % | Ton. |

6. Mischung nach Anspruch 2, gekennzeichnet durch:
| | | |
|---|---|---|
| a) | 72,5% | Vermiculit, |
| b) | 11,0% | Phosphatbinder, |
| c) | 11,0% | H₂O, |
| d) | 4,0 % | hochdisperses Metalloxid, |
| e) | 1,5 % | Ton. |

7. Mischung nach Anspruch 2, gekennzeichnet durch:
| | | |
|---|---|---|
| a) | 79,5% | Vermiculit, |
| b) | 9,0% | Phosphatbinder, |
| c) | 9,0% | H₂O, |
| d) | 1,0% | hochdisperses Metalloxid, |
| e) | 1,5% | Ton. |

8. Mischung nach einem der vorhergehenden Ansprüche, dadurch gekennzeichnet, dass als Phosphatbinder Aluminiumphosphat, insbesondere eine wässrige Lösung eines Monoaluminiumphosphats, Magnesiumphosphat, Natriumaluminiumphosphat, Borphosphat, Chromphosphat, Phosphorsäure, Polyphosphat oder Mischungen von diesen verwendet werden.

9. Mischung nach einem der vorhergehenden Ansprüche, dadurch gekennzeichnet, dass als hochdisperses Metalloxid hochdisperse Kieselsäure, Aluminiumoxid oder Zirkonoxid verwendet wird.

10. Mischung nach einem der vorhergehenden Ansprüche, dadurch gekennzeichnet, dass das verwendete Vermiculit eine Körnung von 0-1 mm, 1-2 mm und/oder 2-4 mm aufweist.

11. Verwendung einer Mischung nach einem der vorhergehenden Ansprüche zur Herstellung eines Formteils.

12. Verfahren zur Herstellung eines Formteils aus einer Mischung nach einem der Ansprüche 1 bis 10, umfassend die folgenden Schritte:
a) das Vermiculit wird vorgemischt,
b) der Mischung aus a) wird der Ton und das Metalloxid zugegeben und alles wird miteinander vermischt,
c) das Wasser und der Phosphatbinder werden miteinander vermischt und der Mischung aus b) zugegeben,
d) die Mischung aus c) wird vermischt und in eine Form gegeben.

13. Verfahren nach Anspruch 12, dadurch gekennzeichnet, dass das Formteil in der Form verpresst wird.

14. Verfahren nach Anspruch 13, dadurch gekennzeichnet, dass das Formteil aus der Form genommen und getempert wird.

15. Formteil aus einer Mischung nach einem der Ansprüche 1 bis 10, insbesondere hergestellt nach einem Verfahren nach einem der Ansprüche 12 bis 14.

16. Formteil nach Anspruch 15, gekennzeichnet durch die Gestalt eines Ringes mit rechteckförmigem Querschnitt.

17. Formteil nach Anspruch 15, gekennzeichnet durch die Gestalt eines Ringes mit rechteckförmigem Querschnitt, der an seinem äußeren Umfang mit einem Bogensegment verbunden ist.

18. Verwendung eines Formteils nach einem der Ansprüche 15 bis 17 zum elektrischen und/oder thermischen Isolieren sowie zur Befestigung von Funktionsteilen.

19. Verwendung nach Anspruch 18, dadurch gekennzeichnet, dass es sich bei den Funktionsteilen um Teile eines Herdes handelt.

20. Verwendung nach Anspruch 19, dadurch gekennzeichnet, dass es sich bei den Funktionsteilen um eine Glaskeramikplatte und eine Unterschale handelt, zwischen denen das Formteil angeordnet ist, und dass das Formteil zur Befestigung einer Heizvorrichtung dient.
